(19) Europäisches Patentamt
European Patent Office
Office européen des brevets

(11) EP 0 857 353 B1

(12) **EUROPEAN PATENT SPECIFICATION**

(45) Date of publication and mention of the grant of the patent:
**01.09.1999 Bulletin 1999/35**

(21) Application number: **96932737.8**

(22) Date of filing: **11.10.1996**

(51) Int Cl.6: **H01J 49/02**, B01D 59/48

(86) International application number:
**PCT/GB96/02459**

(87) International publication number:
**WO 97/15944 (01.05.1997 Gazette 1997/19)**

(54) **THE USE OF A MULTIPLE COLLECTOR FOR ISOTOPE RATIO MASS SPECTROMETERS**

VERWENDUNG EINES VIELFACHKOLLEKTORS FÜR MASSENSPEKTROMETER ZUR MESSUNG VON ISOTOPENVERHÄLTNISSEN

EMPLOI D'UN COLLECTEUR MULTIPLE POUR SPECTROMETRES DE MASSE A RAPPORTS ISOTOPIQUES

(84) Designated Contracting States:
**DE FR GB**

(30) Priority: **24.10.1995 GB 9521723**

(43) Date of publication of application:
**12.08.1998 Bulletin 1998/33**

(73) Proprietor: **Nu Instruments**
**Wrexham, North Wales LL13 9XS (GB)**

(72) Inventor: **FREEDMAN, Philip, Antony**
**Hartford Northwich Cheshire CW8 1QR (GB)**

(74) Representative: **Gallafent, Richard John et al**
**GALLAFENT & CO.,**
**9 Staple Inn**
**London WCIV 7QH (GB)**

(56) References cited:
**US-A- 4 998 015**
**US-A- 5 118 939**
**US-A- 5 194 732**
**US-A- 5 220 167**

- **INTERNATIONAL JOURNAL OF MASS SPECTROMETRY AND ION PROCESSES, vol. 154, 31 May 1996, pages 99-131, XP000609950 SAXTON J M ET AL: "THE MANCHESTER ISOLAB 54 ION MICROPROBE" cited in the application**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 857 353 B1

## Description

There has been an upsurge in the use of the measurement of the relative abundance of isotopes within a specific element over the last few years. By studying the ratios of the isotopes of an element, one of which can be formed from the radioactive decay from a different parent element, it is possible to calculate the age at which a rock sample formed. This technique is now widely employed by the geological community to study the history of terrestrial and extraterrestrial samples. Similarly, isotope ratio measurements of samples from nuclear power plants and reprocessing systems are used as an essential tool for quality control and inventory management. Further, since the isotope fingerprint of samples can depend on their origin, accurate isotope measurement can be employed as an environmental monitoring tool. The most common apparatus for such measurement of naturally occurring or long lived isotopes is known as Isotope Ratio Mass Spectrometer, which may be defined as one designed to allow the precise measurement of the isotopic composition of a sample. A source creates a beam of ions of the element of interest which passes down the instrument to be separated according to their mass to charge ratio, usually by passing through a magnetic field. This source may be Thermal (as in the suite of instruments colloquially known as TIMS - Thermal Ionisation Mass Spectrometer), it may employ a Secondary ionisation ion beam (SIMS), an Inductively Coupled Plasma ion source (ICPMS) or a Glow Discharge source (GDMS). The ions produced pass on to a detector, conventionally a Faraday bucket of varying degrees of sophistication, or some form of ion-multiplier where the ion currents are recorded.

The use of a multiple collector to obtain accurate and precise isotopic measurements of an elemental sample using a mass spectrometer is well known. Since the ion beam intensities of two or more of the isotopes of the element are recorded simultaneously, although the absolute signals may be changing during the measurement process, this does not affect the ratio of these signals, the required measurement parameter. Prior to the use of such multiple collector instruments, measurements had to be undertaken using a peak-jump protocol. whereby the masses of interest were sequentially recorded on a single collector (by changing the mass spectrometer magnetic field or ion energy). Here the precision of the ratio of any two measurements depends directly on the beam stability, and high precision measurements are difficult to obtain.

If the isotope ratio of only a single element is required, it is possible to construct a series of collector elements, at the required separations, to simultaneously collect the various isotopic ion beam signals, and hence provide the means for simple precision measurements. Further, if the instrument is limited to measure the isotopic composition of only a few selected elements, it is also sometimes possible to arrange for an array of collectors to be constructed in which some of these collectors are employed for the measurement of the ratio of one element and others are employed for the isotopic studies of the second element, and so on. Such solutions are severely limiting for the general instrument and are not often used in the latest commercial designs.

The reason for the difficulty in obtaining a 'universal' multiple collector is that, in conventional sector magnetic mass spectrometers, the dispersion (which is defined by the equation below) is dependent on the mechanical dimensions of the sector magnet, and hence a constant for most instruments. Mathematically, the separation between two adjacent masses is given by:

$$R = D/M$$

where:

- R is the separation (in millimetres) between two adjacent masses at the focal plane of the magnet.
- D is the dispersion of the instrument (also in millimetres)
- and M is the arithmetical average of the two masses.

As an example of the use of the above, if we wish to measure two of the strontium isotopes at mass 87amu (atomic mass unit) and 88amu on an instrument which from the magnet design has a dispersion of 540mm, the adjacent collector separation is calculated to be 6.17mm. However if the same instrument is to be used to measure the 207amu to 208amu ratio of lead, the separation required drops to 2.60mm.

In order to provide a 'universal' multiple collector, considerations as indicated above have resulted in the design of detector arrays in which each collector element is individually movable with respect to its neighbours, either manually or under computer control. Although this solution provides the user with the required degree of flexibility in analysis, it is done at the expense of complexity of mechanical design together with a lower reliability compared to those, at present more restricted, designs with no moving parts. Since the complete mass spectrometer operates under ultra high vacuum conditions, the design of such a large number of precisely controlled, moveable collectors is extremely difficult.

All previous isotope multiple collector instruments have relied upon either the use of adjustable spacing between discrete collectors, so that the isotope separations for a particular element may be accommodated by movement of the detectors or a fixed array where the spacings are set to match the dispersion of an individual element. Attempts to utilise continuous focal plane detectors to overcome the constraints of discrete devices have not been successful (see eg Int. J. Mass Spectrom. Ion Processes, 154 (1996) pp99-131, especially Fig 4).

In order to change the dispersion of the instrument, whilst maintaining the position of the focal plane of the final image one may employ a zoom lens. This changes the magnification of the final image without changing the position of the final image plane, and hence alters the dispersion by the corresponding amount. However in order to use a lens to cover the range of analyses normally expected of a modern isotope mass spectrometer (from Calcium at masses 40,42,44 to Plutonium at mass 238,239,240,241,242) requires a zoom range of a factor of up to twelve. This places three serious constraints on any design contemplated using this approach. Firstly the aberrations introduced by the insertion of the zoom lens between the magnet exit pole and the detector array can become excessive at such large zoom ranges. Secondly, since the acceptance angle of the beam is inversely proportional to the magnification, at high demagnification the beam can be so divergent that a large proportion does not reach the base of the collector, but rather strikes the sides of the device, rendering the measured signal inaccurate. Finally since the resolution of the instrument is proportional to the magnification (ignoring the aberrations mentioned above), because the collector slit widths are fixed, problems due to the tailing of intense beams onto weaker neighbours (a measurement of the abundance sensitivity of the instrument) can be expected, giving rise to measurement error.

The use of variable dispersion ion optics is described in US Patents 4998015 and 5118939, but are merely used in association with a continuous focal place detector to condense the spread of the spectrum of interest, which otherwise would fall outside of the bounds of the array and could thus not otherwise be simultaneously recordable. Large zoom factors are used, requiring the use of extra aberration correcting optics for the system to work.

The 'universal' detector array used for isotope mass spectrometry according to the present invention comprises the standard sector magnet designs but without inflicting undue aberrations on the final image quality.

According to the present invention as claimed there is provided a method of measuring the isotope ratios of a range of elements using a mass spectrometer containing a sector magnet, which method comprises of simultaneously imaging the ion beams of the various isotopes of an element being analysed onto an array of fixed collector elements arranged in the focal plane of the ion beams by use of a low power zoom lens operated with a magnification of at most 1.5 placed in the path of the ion beams between the exit pole of the sector magnet and the array of fixed collector elements and wherein the number of collector elements in the array is greater than the number of long lived isotopes of the element having the greatest number of such isotopes among all the elements to be analysed and recording the beam intensities of the ions received in each collector individually.

For example if neodymium is to be analysed this element has seven naturally occurring isotopes thus the mass spectrometer must have at least eight fixed collector elements.

Preferably each collector element is a Faraday Bucket. Alternatively it may be a ion-multiplier or a mixture of the two.

Preferably the collector elements in the centre of the array are separated by the same distance but the collector elements at the outside of the array are separated from each other by twice the distance that separates the collector elements in the centre of the array. This enables fewer collector elements to be used.

By low power zoom lens is meant a zoom lens normally used to only alter the magnification by small amounts.

In one embodiment of the isotope ratio mass spectrometer used in the method of the present invention the distance between adjacent collector elements in the centre of the array was 2.5mm and the distance between adjacent collector elements at each end of the array was 5mm. In this embodiment the zoom lens used operated between a magnification of 1.5 and a demagnification of 0.66.

The accompanying figure illustrates a suitable fixed collector array for use in the present invention.

Each collector is a Faraday Bucket collector. The array comprises collectors +7 to -5 arranged along the focal plane of the ion beam which is indicated by the arrow. Collectors +6 to -2 are separated from each other by 2.5mm. +7 is separated from +6 by 5mm and -2, -3, -4 and -5 are separated from each other by 5mm.

The preferred small zoom lens is a double quadrupole field element.

When considering how the collector element shown in fig 1 is used the action of the zoom lens is initially ignored. In analysis of the isotopes of a heavy element the separation between adjacent masses is small. It is assumed that for this element the separation between adjacent masses is just correct for the beams to be separated by 2.5mm, and thus all the isotopes fall into the centre set of collectors. In practice not all of the collectors will be used, for example if there are less than 7 adjacent isotopes in the element of interest.

When considering the isotopic analysis of an element of half the mass as the original, rather than utilise the zoom lens, use is made of the fact that more collectors are present than might be expected and the analysis is done using alternate buckets in the centre of the collector array. Specifically there can be used a 5mm collector separation which can be made up of collectors labelled:

+7, +6, +4, +2, 0, -2, -3, -4, -5.

For an element of one third the mass of our original example, collectors of 7.5mm spacing are required. This can be arranged using the collectors labelled (for example):

+7, +5, +2, -1, -3.

In practice the separation between adjacent masses will not coincide precisely with the collector spacing used. However the use of the zoom lens configuration operating between a magnification of 1.5 and a demagnification of 0.66 will be seen to cover all normal possibilities. In practice it is found that an even lower zoom factor is required for the lighter elements. Again if a non-standard analysis is required extra collectors may be slotted into the array.

Another advantage of the configuration shown is apparent when ion multiplier collection channels are added between the buckets labelled (-2) and (-3), (-3) and (-4) and (-4) and (-5). Use of the zoom lens to focus adjacent masses into these channels requires larger zoom factors than stated above for the Faraday buckets, for example at mass 238amu a magnification of 2.14 is calculated using the preferred design. However since the measurement precision obtainable using such detectors is less than with Faraday buckets (due to the poorer statistics concomitant with using smaller beams with such devices), slight aberration imperfections can be accommodated. As the mass of the element of interest falls, the desirability of only using the two outer ion-counting channels instead of the three adjacent and hence minimise aberrations, occurs, as with the case with the Faraday array described above. Since the ion multipliers remain fixed in this arrangement, the possibility of utilising large, discrete dynode devices, rather than the smaller continuous dynode versions, is easily achievable by use of the simple beam transfer optics after the defining slits placed on the focal plane. This should greatly improve the performance of the array as a multiple ion counting system over other designs which employ movable detectors.

The use of the low power zoom lens in the mass peak measurement sequence opens up possibilities for the instrument which are not possible utilising pre-existing designs. Merely as an example consider the problem encountered on other designs in calibrating the relative gain efficiencies of separate detector channels, data necessary to measure absolute ratios. In conventional mass spectrometers these data are obtained by the sequential measurement of a stable ion beam switched between the various detector channels and is limited in precision to the variations of the ion beam intensity, making this a difficult and time consuming measurement. The new design allows one the possibility of removing this noise term for example: recording the ratio of two isotopes in buckets (A) and (B) is followed by a similar measurement using buckets (A) and (C) of the same isotope pair by altering the zoom factor of the lens. Comparison of these two ratios provides an easily achieved accurate measurement of the relative gain of detectors (B) and (C).

The accompanying table shows which collectors were used when elements having an atomic weight of from 238 uranium down to calcium were ionised in the mass spectrometer of the present invention. This shows that nine elements each with a different number of isotopes could be analysed using a different zoom factor to ensure that the beam signals were collected in the requisite collector elements. Thus in fact only thirteen fixed collector elements were required to analyse forty five beam signals.

## Claims

1. A method of measuring the isotope ratios of a range of elements using a mass spectrometer containing a sector magnet, which method comprises of simultaneously imaging the ion beams of the various isotopes of an element being analysed onto an array of fixed collector elements arranged in the focal plane of the ion beams by use of a low power zoom lens operated with a magnification of at most 1.5 placed in the path of the ion beams between the exit pole of the sector magnet and the array of fixed collector elements and wherein the number of collector elements in the array is greater than the number of long lived isotopes of the element having the greatest number of such isotopes among all the elements to be analysed and recording the beam intensities of the ions received in each collector element individually.

2. A method according to claim 1 wherein each collector element is a Faraday bucket.

3. A method according to claim 1 wherein each collector element is an ion multiplier.

4. A method according to claim 1 wherein the zoom lens is operated between a magnification of 1.5 and a demagnification of 0.66.

5. A method according to claim 1 wherein the zoom lens is a double quadrupole field element.

## Patentansprüche

1. Eine Methode zur Messung von Isotopenverhältnissen eines Bereichs von Elementen unter Benutzung eines einen Sektormagneten beeinhaltenden Massenspektrometers, die daraus besteht, gleichzeitig Ionenstrahlen der unterschiedlichen Isotope eines Elementes abzubilden, die mittels einer Anordnung festinstallierter Kollektorelemente in der Brennebene der Ionenstrahlen gemessen werden unter Benutzung einer Niedrigenergiezoomlinse, die mit einem maximalen Vergrößerungsfaktor von 1.5 betrieben wird und die im Pfad der Ionenstrahlen zwischen deren Austrittspol aus dem Sektormagneten und der Anordnung der festinstallierten Kollektorelemente angebracht ist und wobei die Anzahl der Kollektorelemente in der Anordnung größer als die Anzahl der langlebigen Isotope des Elements, das die höchste Anzahl solcher Isotope unter allen zu analysierenden Elementen hat und wobei die Strahlintensitäten der Ionen in jedem Kollektorelement einzeln empfangen werden.

2. Eine Methode entsprechend Anspruch 1, wobei jedes Kollektorelement ein Faradaytopf ist.

3. Eine Methode entsprechend Anspruch 1, wobei jedes Kollektorelement ein Ionenmultiplier ist.

4. Eine Methode entsprechend Anspruch 1, wobei die Zoomlinse zwischen einem Vergrößerungsfaktor von 1.5 und einem Verkleinerungsfaktor von 0.66 betrieben wird.

5. Eine Methode entsprechend Anspruch 1, wobei die Zoomlinse ein Doppelquadrupolfeldelement ist.

## Revendications

1. Une **méthode** pour mesurer les proportions isotopiques d'un échantillon d'éléments en utilisant un spectromètre de masse muni d'un aimant à secteurs, ladite **méthode** étant la projection simultanée des faisceaux d 'ions provenant des divers isotopes d'un élément sous analyse sur une rangée de collecteurs fixes situés dans le plan focal de ces faisceaux d'ions à travers une lentille zoom de faible puissance et de gain maximum de 1.5 placé dans la trajectoire des faisceaux d'ions entre le pôle de sortie de l'aimant à secteurs et la rangée de collecteurs fixes dont le nombre de collecteurs dans cette rangée est plus grand que le nombre d'isotopes à longue durée de vie de l'élément ayant le plus grand nombre de ces isotopes parmi tous les éléments à analyser et l'enregistrement des intensités des ions reçus dans chaque collecteur individuellement.

2. Une **méthode** conforme à la revendication 1 dans laquelle chaque collecteur est une cage de Faraday.

3. Une **méthode** conforme à la revendication 1 dans laquelle chaque collecteur est un multiplicateur d'ions.

4. Une **méthode** conforme à la revendication 1 dans laquelle la lentille zoom est opérée entre un gain de 1.5 et de 0.66.

5. Une **méthode** conforme à la revendication 1 dans laquelle le zoom est à élément de champ double quadruple.

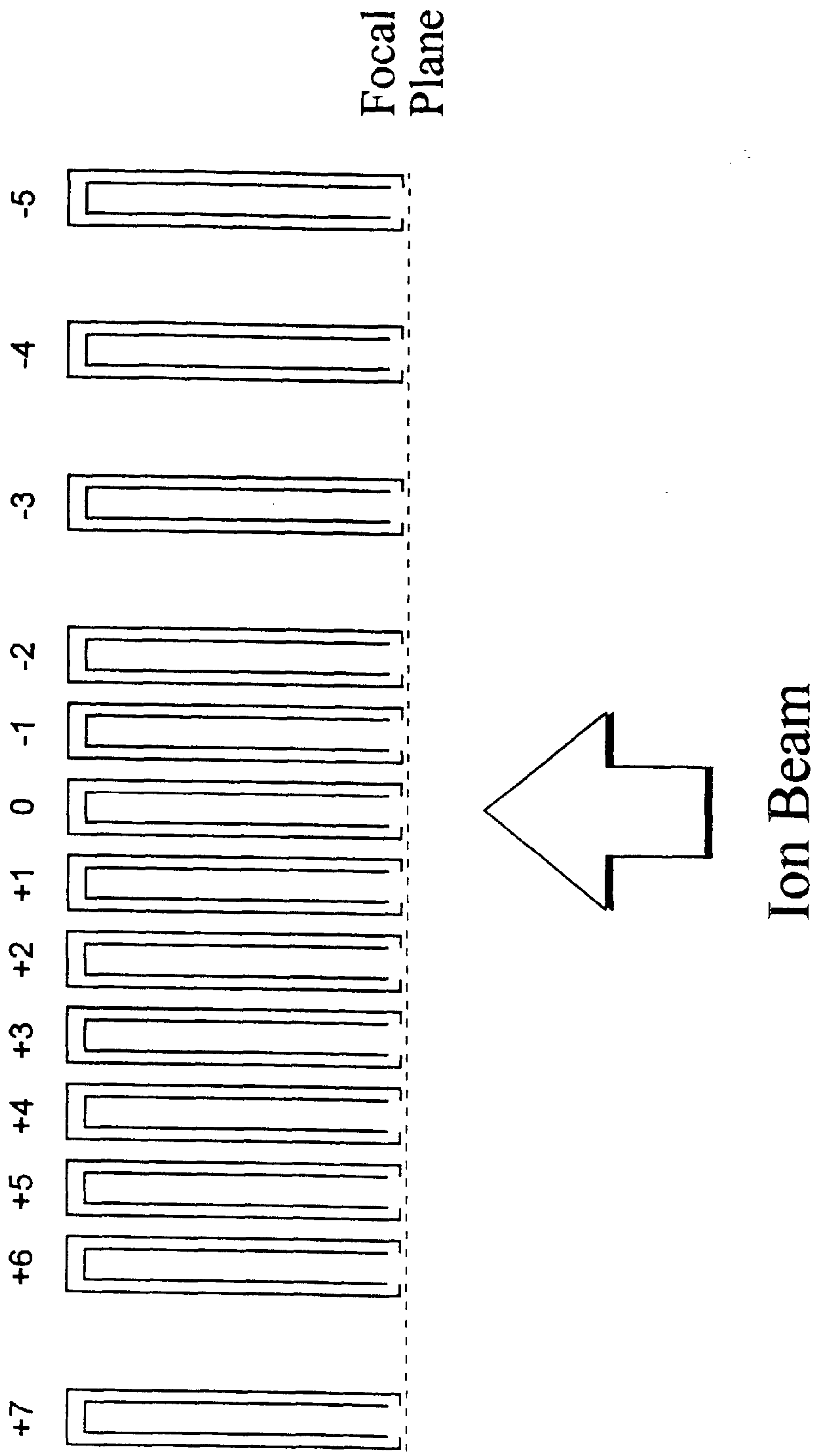
Focal Plane
-5
-4
-3
-2
-1
0
+1
+2
+3
+4
+5
+6
+7
Ion Beam

## Table 1 : Collector assignments for varying elements

| Element | Zoom Factor | Collector Assignment +7 | +6 | +5 | +4 | +3 | +2 | +1 | 0 | -1 | -2 | -3 | -4 | -5 |
|---|---|---|---|---|---|---|---|---|---|---|---|---|---|---|
| Lead | 0.92 | | | | | | 208 | 207 | 206 | | 204 | | | |
| Uranium | 1.04 | | | | | 238 | | 236 | 235 | 234 | | | | |
| Osmium* | 1.13 | | | 256 | | 254 | 253 | 252 | 251 | 250 | | | | |
| Gadolinium | 0.7 | | | | 160 | | 158 | 157 | 156 | 155 | 154 | | | |
| Neodymium | 1.29 | 150 | | | 148 | | | | 146 | | 145 | 144 | 143 | 142 |
| Molybdenum | 0.86 | 100 | | | 98 | | 97 | | 96 | | 95 | 94 | 92 | |
| Strontium | 0.78 | | | | | | 88 | | 87 | | 86 | | 84 | |
| Zinc | 1.19 | 68 | | | 67 | | | | 66 | | | | | 64 |
| Calcium | 0.76 | 44 | | | | | | | 42 | | | | | 40 |

* Analysed as the Tetroxide